## Europäisches Patentamt

## European Patent Office

## Office européen des brevets

(19)

(11) Veröffentlichungsnummer: **0 180 738**
**B1**

(12) **EUROPÄISCHE PATENTSCHRIFT**

(45) Veröffentlichungstag der Patentschrift:
07.01.88

(21) Anmeldenummer: **85111328.2**

(22) Anmeldetag: **07.09.85**

(51) Int. Cl.⁴: **B 23 K 7/04**, B 23 K 7/10,
B 23 K 37/02

(54) **Rohrbrennschneidmaschine.**

(30) Priorität: **27.10.84 DE 3439431**

(43) Veröffentlichungstag der Anmeldung:
**14.05.86 Patentblatt 86/20**

(45) Bekanntmachung des Hinweises auf die Patenterteilung:
**07.01.88 Patentblatt 88/1**

(84) Benannte Vertragsstaaten:
**AT BE CH FR GB IT LI NL SE**

(56) Entgegenhaltungen:
**DD - A - 103 585
DE - A - 2 744 362
DE - A - 2 918 668
DE - A - 3 011 256
DE - A - 3 150 971
DE - B - 1 463 226
DE - C - 1 141 514
DE - C - 2 616 522
US - A - 4 229 642**

**PATENT ABSTRACTS OF JAPAN, Band 8, Nr. 180
(M-318)[1617], 18.August 1984; & JP - A - 59 73185
(NIPPON KOKAN K.K.) 25.04.1984
TECHNIKA, Nr. 12, 1980, Seiten 1037-1054, Basel, CH;
G.W. KÖHLER "Industrie-Roboter"**

(73) Patentinhaber: **MESSER GRIESHEIM GMBH, Hanauer
Landstrasse 330, D-6000 Frankfurt/Main 1 (DE)**

(72) Erfinder: **Becker, Werner, Wachenheimer Strasse 6,
D-6237 Liederbach (DE)**
Erfinder: **Kowalke, Klaus, Am Hasenpfad 18,
D-6113 Babenhausen (DE)**

**Beschreibung**

Die Erfindung betrifft eine Rohrbrennschneidmaschine nach dem Oberbegriff des Anspruchs 1.

Mit derartigen Rohrbrennschneidmaschinen werden an Rohren unterschiedliche Schnittformen, wie beispielsweise Rundschnitte, Anpassungsschnitte, Gehrungsschnitte, Durchdringungskonturen jeweils mit oder ohne Schweisskantenvorbereitung mit einem Schneidbrenner thermisch geschnitten. Hierzu soll die Rohrbrennschneidmaschine in einer Mehrzahl von Achsen automatisch nach einem Steuerprogramm steuerbar sein.

Aus der DE-A1 31 50 971 ist es bekannt, ein über angetriebene Rollen drehbares Rohr mit einer automatisch gesteuerten Rohrbrennschneidmaschine zu bearbeiten. Die Rohrbrennschneidmaschine weist einen höhenverfahrbaren Kragarm auf, mit dem eine Längsführung schwenkbar verbunden ist.

In der Längsführung ist ein Führungsteil für einen entlang der Längsführung verfahrbaren Brennerschlitten vorgesehen. Der Brenner ist an dem Schlitten um eine Kippachse schwenkbar.

Bei dieser Rohrbrennschneidmaschine ist es nötig, jeweils die gesamte Längsführung des Schlittens während des Schneidens von beispielsweise Durchdringungskurven kontinuierlich zu drehen. Dies führt in Verbindung mit der kontinuierlichen Fahrbewegung des Schlittens an der Längsführung zu dynamischen Belastungen der Maschine. Weiterhin muss in der Längsführung ein zweiter, ein Gegengewicht bildender Schlitten angeordnet werden, der eine gesonderte Steuerung und Antriebselemente benötigt.

Der Erfindung liegt die Aufgabe zugrunde, eine besonders einfache Rohrbrennschneidmaschine zu schaffen, deren während des Brennschnittes hauptsächlich bewegte Massen klein sind und diese Massen besser bei hohen Arbeitsgeschwindigkeiten dynamisch zu bewältigen sind.

Diese Aufgabe wird bei einer gattungsgemässen Einrichtung durch die kennzeichnenden Merkmale des Anspruchs 1 gelöst.

Weiterbildungen der Erfindung sind in den Unteransprüchen angegeben.

Die mit der Erfindung erzielten Vorteile bestehen insbesondere darin, dass durch die Aufteilung der Bewegungen auf Kragarm oder Portal, Brennerwagen und Brennerhalterung kurze, gerade Kraftwege erreicht werden, mit denen eine hohe dynamische Steifigkeit erreicht wird.

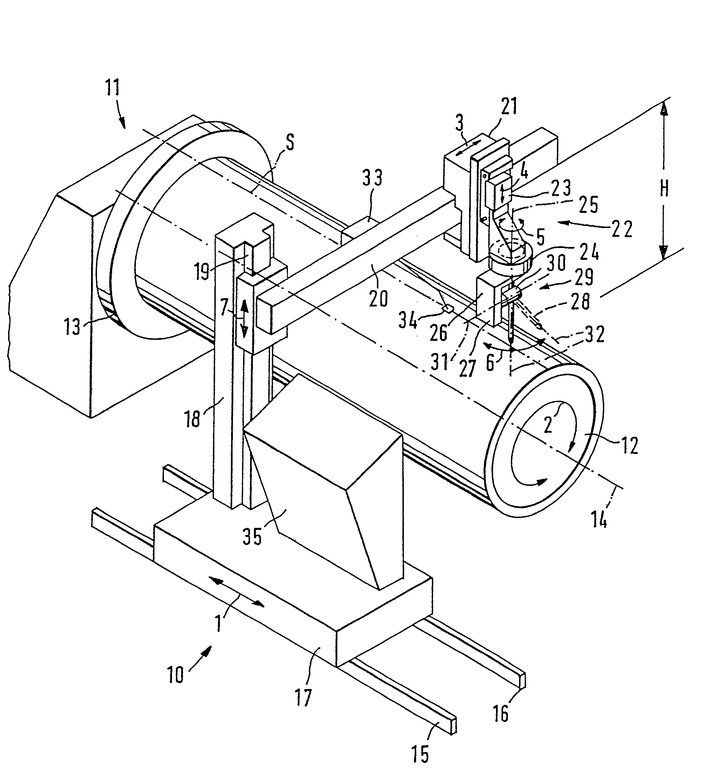

In der Zeichnung ist eine perspektivische Prinzipskizze der Rohrbrennschneidmaschine 10 und der Vorrichtung 11 zum Drehen des Rohres 12 dargestellt.

Die Vorrichtung 11 besteht aus einem angetriebenen Dreibackenfutter 13. Mit der Vorrichtung 11 wird das Rohr um die Längsachse 14 in Pfeilrichtung 2 gedreht.

Die Rohrbrennschneidmaschine 10 besteht aus einem auf Fahrbahnen 15, 16 in Pfeilrichtung 1 verfahrbaren Antriebswagen 17, auf dem ein Ständer 18 und eine NC-Steuerung 35 befestigt sind.

Die Fahrbahnen 15, 16 sind dabei parallel zu der Längsachse 14 des Rohres 12 angeordnet, so dass der Ständer 18 seitlich versetzt entlang der Längsachse 14 verfahrbar ist. An dem Ständer 18 ist eine Vertikalführung 19 befestigt, an der ein das Rohr 12 in radialer Richtung überragender Kragarm 20 in Pfeilrichtung 7 verfahrbar angeordnet ist. An dem Kragarm 20 ist ein auf vorzugsweise zwei Führungen laufender motorisch angetriebener Brennerwagen 21 befestigt, der über einen nicht näher dargestellten Präzisionszahnstangenantrieb in Pfeilrichtung 3 längs des Kragarmes verfahrbar ist. An dem Brennerwagen 21 ist die Brennerhalterung 22 befestigt.

Die Brennerhalterung 22 besteht aus einem in Pfeilrichtung 4 verfahrbaren Vertikalschlitten 23, an dem ein Drehteil 24 befestigt ist. Das Drehteil 24 ist um die senkrechte Drehachse 25 in Pfeilrichtung 5 drehbar. Mit dem Drehteil 24 ist vorzugsweise ein Winkel 26 verbunden, der als Brennerhalter ausgebildet ist. Hierzu ist in dem freien, zum Rohr 12 weisenden Schenkel 27 des Winkels 26 ein den Brenner 28 tragendes Drehgelenk 29 befestigt. Vorzugsweise besteht das Drehgelenk 29 aus seiner den Brenner 28 tragenden Welle 30, die in dem Schenkel 27 drehbar gelagert ist und die in der senkrechten Drehachse 25 eine Bohrung aufweist, in der der Brenner befestigt wird. Der Brenner 28 ist um die Längsachse 31 des Drehgelenkes 29 derart in Pfeilrichtung 6 schwenkbar, dass die Brennerachse 32 bei senkrecht stehendem Brenner 28 in der Drehachse 25 liegt.

Als Brenner können hierbei für den Schneidvorgang Autogen- oder Plasmaschneidbrenner eingesetzt werden.

Selbstverständlich ist es auch möglich, anstatt einem am Ständer 18 angeordneten Kragarm 20 die Rohrbrennschneidmaschine 10 in Portalbauweise auszubilden. Dies ist insbesondere dann von Vorteil, wenn im wesentlichen Rohre mit sehr grossem Durchmesser geschnitten werden.

Die Herstellung eines thermischen Schnittes mit einer vorbestimmten Schnittkontur (Durchdringungskurve) und einer wahlfreien Schweisskantenvorbereitung, welche jedem einzelnen Punkt der Kontur zugeordnet werden kann, wird durch die NC-gesteuerte motorische Bewegung des Brenners 28 in den Pfeilrichtungen 1, 3, 4, 5 und 6 und durch Drehen des Rohres 12 in der Pfeilrichtung 2 erreicht. Die Bewegung des Antriebswagens 17 in Pfeilrichtung 1 und die Drehbewegung des Rohres 12 in Pfeilrichtung 2 werden in bekannter Weise so gesteuert, dass sich die gewünschte Schnittkontur (Durchdringungskurve ohne Berücksichtigung der Dicke der Rohrwandung) am Rohr 12 ergibt.

Die sich durch die Schwenkbewegung in Pfeilrichtung 6 und die Drehbewegung in Pfeilrichtung 5 ergebenden Versetzungen des Brennerwirkpunktes werden durch die entsprechend programmierte Steuerung der Linearbewegungen in Pfeilrichtung 1, 3 und 4 berücksichtigt und kompensiert.

Der Brenner 28 wird in jedem Punkt mit den Achsen in Pfeilrichtung 1, 3, 4, 5 und 6 so geführt, dass er immer die kürzestmögliche Schnittiefe bearbeitet. Aus Übersichtsgründen wurden die von der NC-Steuerung 35 nach mathematischen Funktionen gesteuerten Antriebsmotore der Achsen in den Pfeilrichtungen 1 bis 7 nicht näher dargestellt.

Zur Vermeidung von Fehlern beim Schneiden von insbesondere Durchdringungskurven mit Schweisskantenvorbereitung bei unrunden Rohren 12 ist an den Kragarm 20 eine Höhensteuerung 33 angeschlossen. Die Höhensteuerung 33 weist einen kapazitiven Sensor 34 auf, der die vor Schnittbeginn fest eingestellte Höhe H des Kragarms 20 und damit den Bezugspunkt der Steuerung konstant hält. Hierzu ist der kapazitive Sensor 34 über dem Rohrscheitel S angeordnet. Abweichungen werden dabei von dem kapazitiven Sensor 34 ermittelt und der Kragarm in Pfeilrichtung 7 nachgeregelt.

Durch diese Art der Konstanthaltung des Bezugspunktes werden vorteilhaft die durch die Steuerung während des Schnittes bewegten Achsen in Pfeilrichtung 3, 4, 5 und 6 von der Nachregelung nicht beeinflusst.

Mit der oben beschriebenen Rohrbrennschneidmaschine 10 und der Vorrichtung 11 zum Drehen des Rohres 12 wird der Brenner 28 innerhalb eines Kegelmantels so geführt, dass sich die Schneidstrahlachse (im vorliegenden Ausführungsbeispiel identisch mit der Brennerachse 32) an jedem Punkt der Durchdringungslinie mit der Innenkante des Rohres 12 schneidet. Die senkrechte Mittelachse des gedachten Kegels kann je nach Programmierung des Schnittverlaufs am Innen- oder Aussendurchmesser des Rohres 12 geführt werden.

Der maximale Kegelwinkel ist von dem anzuwendenden Schneidverfahren und von der Geometrie der Brennerspitze abhängig. Beispielsweise bei Autogenbrennern zweimal 70° und bei Plasmabrennern zweimal 45°.

Eine derartige Schweisskantenvorbereitung mit der beschriebenen Rohrbrennschneidmaschine 10 ist durchführbar
a) an allen mathematisch bestimmbaren Durchdringungskonturen wie z.B. Anpassungen und Gehrungen an Rohrenden sowie Durchdringungsöffnungen;
b) an frei programmierbaren Schnittkonturen wie z.B. an Rechteckausschnitten mit und ohne Radien;
c) an zylindrischen und konischen Rohren, rotationssymmetrischen Hohlkörpern mit kugeliger Oberfläche;
d) an Rohren mit quadratischem und rechteckigem Querschnitt.

## Patentansprüche

1. Rohrbrennschneidmaschine
mit einem Kragarm (20) oder Portal, das entlang einer Längsachse (14) eines Rohres (2) verfahrbar und in seiner Höhe entlang mindestens eines Ständers (18) verstellbar ist,
einer Brennerhalterung (22), die in ihrer Höhe über dem Rohr (2) einstellbar mit dem Kragarm (20) oder Portal verbunden ist,
und einer Vorrichtung (11) zum Drehen des Rohres um seine Längsachse,
dadurch gekennzeichnet,
dass die Brennerhalterung (22) an einem Brennerwagen (21) befestigt ist, der auf dem Kragarm (20) oder Portal verfahrbar ist,
dass an der Brennerhalterung (22) ein Drehteil (24) mit senkrechter Drehachse (25) befestigt ist,
dass mit dem Drehteil (24) ein Brenner (28) verbunden ist, der um eine senkrecht zur Drehachse (25) verlaufende Achse schwenkbar ist.

2. Einrichtung nach Anspruch 1,
dadurch gekennzeichnet,
dass mit dem Drehteil (24) ein Brennerhalter verbunden ist, und der Brennerhalter als Winkel (26) ausgebildet ist.

3. Einrichtung nach Anspruch 1 oder 2,
dadurch gekennzeichnet,
dass die Brennerachse (32) bei senkrecht stehendem Brenner (28) in der Drehachse (25) liegt.

4. Einrichtung nach einem der Ansprüche 1 bis 3,
dadurch gekennzeichnet,
dass der Brenner (28) um ein senkrecht zur Drehachse (25) angeordnetes Drehgelenk (29) schwenkbar ist.

5. Einrichtung nach einem der Ansprüche 1 bis 4,
dadurch gekennzeichnet,
dass an dem Kragarm (20) oder Portal eine Höhensteuerung (33) zur Konstanthaltung des Abstandes H zwischen Kragarm (20) und Rohrscheitel (S) angeschlossen ist.

## Claims

1. Pipe flame cutting machine with a cantilever (20) or gantry, which can be moved along a longitudinal axis (14) of a pipe (2) and can be adjusted in its height along at least one upright (18), with a torch mounting (22), which is connected to the cantilever (20) or gantry and can be set in its height above the pipe (2), and with a device (11) for turning the pipe about its longitudinal axis, characterized in that the torch mounting (22) is fixed on a torch carriage (21), which can be moved on the cantilever (20) or gantry, in that a rotary part (24) with vertical axis of rotation (25) is fixed on the torch mounting (22) and in that a torch (28) is connected to the rotary part (24) and can be swung about an axis perpendicular to the axis of rotation (25).

2. Device according to claim 1, characterized in that a torch mount is connected to the rotary part (24) and the torch mount is designed as angle (26).

3. Device according to claim 1 or 2, characterized in that the torch axis (32) lies in the axis of rotation (25) when the torch (28) is vertical.

4. Device according to 1 of claims 1 to 3, characterized in that the torch (28) can be swung about a swivel joint (29) arranged perpendicular to the axis of rotation (25).

5. Device according to 1 of claims 1 to 4, characterized in that a height control (33) is connected to the cantilever (20) or gantry to maintain constant the distance H between cantilever (20) and pipe crown (S).

**Revendications**

1. Machine d'oxy-coupage de tubes avec un bras en porte-à-faux (20) ou un portique, qui est susceptible de se déplacer le long d'un axe longitudinal (14) d'un tube (2) et qui est susceptible d'être réglé en hauteur le long d'au moins un montant (18), avec un support de chalumeau (22) qui est relié au bras en porte-à-faux (20) ou au portique en étant réglable en hauteur au-dessus du tube (2), et avec un dispositif (11) pour entraîner en rotation le tube autour de son axe longitudinal, machine caractérisée en ce que le support de chalumeau (22) est fixé sur un chariot de chalumeau (21) qui est susceptible de se déplacer sur le bras en porte-à-faux (20) ou le portique, une pièce rotative (24) avec un axe de rotation vertical (25) étant fixée sur le support de chalumeau (22), un chalumeau (28) étant relié à cette pièce rotative (24) et étant susceptible de pivoter autour d'un axe perpendiculaire à l'axe de rotation (25).

2. Machine selon la revendication 1, caractérisée en ce qu'un porte-chalumeau est relié à la pièce rotative (24), ce porte-chalumeau revêtant la forme d'une équerre (26).

3. Machine selon la revendication 1 ou 2, caractérisée en ce que l'axe (32) du chalumeau se situe sur l'axe de rotation (25) lorsque le chalumeau (28) est vertical.

4. Machine selon une des revendications 1 à 3, caractérisée en ce que le chalumeau (28) est susceptible de pivoter autour d'une articulation rotative (29) disposée perpendiculairement à l'axe de rotation (25).

5. Machine selon une des revendications 1 à 4, caractérisée en ce qu'une commande en hauteur (33) pour maintenir constant l'intervalle H entre le bras en porte-à-faux (20) et le sommet (S) du tube est raccordée au bras en porte-à-faux (20) ou au portique.